# EUROPÄISCHE PATENTSCHRIFT

(11) **EP 1 306 454 B1**
(45) Veröffentlichungstag und Bekanntmachung des Hinweises auf die Patenterteilung: **06.10.2004**
(21) Anmeldenummer: 01125260.8
(22) Anmeldetag: 24.10.2001
(51) Int. Cl.: C22C 19/05, C23C 28/00, C23C 30/00, F01D 5/28

(54) **Rhenium enthaltende Schutzschicht zum Schutz eines Bauteils gegen Korrosion und Oxidation bei hohen Temperaturen**
Rhenium containing protective coating protecting a product against corrosion and oxidation at high temperatures
Revêtement protecteur contenant du rhénium pour la protection d'un élément contre l'oxydation et la corrosion aux températures élevées

(43) Veröffentlichungstag der Anmeldung: 02.05.2003
(73) Patentinhaber: SIEMENS AKTIENGESELLSCHAFT, 80333 München (DE)
(72) Erfinder: Stamm, Werner, Dr., 45481 Mülheim a.d. Ruhr (DE)

(56) Entgegenhaltungen:
- EP-A- 0 412 397
- WO-A-01/72455
- WO-A-99/55527
- CZECH, N. (SIEMENS) ET AL: "Improvement of MCrAlY Coatings by Addition of Rhenium." SURF. COAT. TECHNOL. (1 DEC. 1994) 68/69, 17-21 ISSN: 0257-8972, XP002191473
- QUADAKKERS, W.J. (FORSCHUNGSZENTRUM JULICH) ET AL: "Long-term oxidation tests on a Re-containing MCrAlY coating." SURFACE AND COATINGS TECHNOLOGY (OCT. 1997) 94-95, (1-3), 41-45, PHOTOMICROGRAPHS, GRAPHS, 9 REF.. SWITZERLAND CONFERENCE: 24TH INTERNATIONAL CONFERENCE ON METALLURGICAL COATINGS AND THIN FILMS, SAN DIEGO, CALIFORNIA, USA, 21-25 APR. 1997 ISSN: 0257-, XP002191474
- ANTON, R. (SIEMENS) ET AL: "Degradation of advanced MCrAlY coatings by oxidation and interdiffusion." MATERIALS SCIENCE FORUM (2001) 369-372, (PART 2), 719-726, GRAPHS, 7 REF. TRANS TECH PUBLICATIONS LTD.. TRANS TECH HOUSE, AEDERMANNSDORF, 4711, SWITZERLAND CONFERENCE: 5TH INTERNATIONAL SYMPOSIUM ON HIGH TEMPERATURE CORROSION AND PROTECTION OF MATERI, XP002191475

## Beschreibung

Die Erfindung betrifft eine Rhenium enthaltende Schutzschicht zum Schutz eines Bauteils gegen Korrosion und Oxidation bei hohen Temperaturen, wobei das Bauteil, insbesondere ein Bauteil einer Gasturbine, bei einer hohen Temperatur mit einem Rauchgas oder dergleichen zu beaufschlagen ist.

Die Erfindung bezieht sich insbesondere auf eine Schutzschicht für ein Bauteil, das aus einer Superlegierung auf Nickel- oder Kobaltbasis besteht.

Schutzschichten für metallische Bauteile, die deren Korrosionsbeständigkeit und/oder Oxidationsbeständigkeit erhöhen sollen, sind im Stand der Technik in großer Zahl bekannt. Die meisten dieser Schutzschichten sind unter dem Sammelnamen MCrAlY bekannt, wobei M für mindestens eines der Elemente aus der Gruppe umfassend Eisen, Kobalt und Nickel steht und weitere wesentliche Bestandteile Chrom, Aluminium und Yttrium, wobei letzteres auch ganz oder teilweise durch ein diesem äquivalentes Element aus der Gruppe umfassend Scandium und die Elemente der seltenen Erden ersetzt sein kann, sind.

Typische Beschichtungen dieser Art sind aus den US-Patenten 4,005,989 und 4,034,142 bekannt. Aus dem letztgenannten Patent ist außerdem bekannt, daß ein zusätzlicher Anteil an Silizium die Eigenschaften von Schutzschichten des oben genannten Typs weiter verbessern kann.

Aus der EP-A 0 194 392 sind weiterhin zahlreiche spezielle Zusammensetzungen für Schutzschichten des obigen Typs mit Beimischungen weiterer Elemente für verschiedene Anwendungszwecke bekannt. Dabei ist auch das Element Rhenium mit Beimischungen bis 10 % Gewichtsanteil neben vielen anderen wahlweise beifügbaren Elementen erwähnt. Wegen wenig spezifizierter weiter Bereiche für mögliche Beimischungen ist jedoch keine der angegebenen Schutzschichten für besondere Bedingungen qualifiziert, wie sie beispielsweise an Laufschaufeln und Leitschaufeln von Gasturbinen mit hohen Eintrittstemperaturen, die über längere Zeiträume betrieben werden müssen, auftreten.

Schutzschichten, die Rhenium enthalten, sind auch aus dem US-Patent 5,154,885, der EP-A 0 412 397, der DE 694 01 260 T2 und der WO 91/02108 A1 bekannt. Die aus diesen Dokumenten insgesamt entnehmbare Offenbarung ist vorliegender Offenbarung in vollem Umfang zuzurechnen.

Ausführungen zum Aufbringen einer Schutzschicht auf ein thermisch hoch zu belastendes Bauteil einer Gasturbine sind der EP 0 253 754 A1 zu entnehmen.

Die Bemühung um die Steigerung der Eintrittstemperaturen sowohl bei stationären Gasturbinen als auch bei Flugtriebwerken hat auf dem Fachgebiet der Gasturbinen eine große Bedeutung, da die Eintrittstemperaturen wichtige Bestimmungsgrößen für die mit Gasturbinen erzielbaren thermodynamischen Wirkungsgrade sind. Durch den Einsatz speziell entwickelter Legierungen als Grundwerkstoffe für thermisch hoch zu belastende Bauteile wie Leit- und Laufschaufeln, insbesondere durch den Einsatz einkristalliner Superlegierungen, sind Eintrittstemperaturen von deutlich über 1000° C möglich. Inzwischen erlaubt der Stand der Technik Eintrittstemperaturen von 950° C und mehr bei stationären Gasturbinen sowie 1100° C und mehr in Gasturbinen von Flugtriebwerken.

Beispiele zum Aufbau einer Turbinenschaufel mit einem einkristallinen Substrat, die seinerseits komplex aufgebaut sein kann, gehen hervor aus der WO 91/01433 Al.

Während die physikalische Belastbarkeit der inzwischen entwickelten Grundwerkstoffe für die hoch belasteten Bauteile im Hinblick auf mögliche weitere Steigerungen der Eintrittstemperaturen weitgehend unproblematisch ist, muß zur Erzielung einer hinreichenden Beständigkeit gegen Oxidation und Korrosion auf Schutzschichten zurückgegriffen werden. Neben der hinreichenden chemischen Beständigkeit einer Schutzschicht unter den Angriffen, die von Rauchgasen bei Temperaturen in der Größenordnung von 1000° C zu erwarten sind, muß eine Schutzschicht auch genügend gute mechanische Eigenschaften, nicht zuletzt im Hinblick auf die mechanische Wechselwirkung zwischen der Schutzschicht und dem Grundwerkstoff, haben. Insbesondere muß die Schutzschicht hinreichend duktil sein, um eventuellen Verformungen des Grundwerkstoffes folgen zu können und nicht zu reißen, da auf diese Weise Angriffspunkte für Oxidation und Korrosion geschaffen würden. Hierbei kommt typischerweise das Problem auf, daß eine Erhöhung der Anteile von Elementen wie Aluminium und Chrom, die die Beständigkeit einer Schutzschicht gegen Oxidation und Korrosion verbessern können, zu einer Verschlechterung der Duktilität der Schutzschicht führt, so daß mit einem mechanischen Versagen, insbesondere der Bildung von Rissen, bei einer in einer Gasturbine üblicherweise auftretenden mechanischen Belastung zu rechnen ist. Beispiele für die Verringerung der Duktilität der Schutzschicht durch die Elemente Chrom und Aluminium sind im Stand der Technik bekannt.

Aus der WO 01/09403 A1 ist eine Superlegierung für ein Substrat bekannt, die ebenfalls Rhenium enthält. Es wird dort beschrieben, dass die von Rhenium gebildeten intermetallischen Phasen die Langzeitstabilität der Superlegierung reduziert. Dies kann durch Zugabe von Ruthenium verringert werden.

Dementsprechend liegt der Erfindung die Aufgabe zugrunde, eine Schutzschicht anzugeben, die eine gute Hochtemperaturbeständigkeit in Korrosion und Oxidation aufweist, eine gute Langzeitstabilität aufweist und die außerdem einer mechanischen Beanspruchung, die insbesondere in einer Gasturbine bei einer hohen Temperatur zu erwarten ist, besonders gut angepaßt ist.

Der Erfindung liegt die Erkenntnis zugrunde, dass die Schutzschicht in der Schicht und in dem Übergangsbereich zwischen Schutzschicht und Grundwerkstoff spröde Chrom-Rhenium-Ausscheidungen zeigt. Diese mit der Zeit und Temperatur im Einsatz sich verstärkt ausbildenden Sprödphasen führen im Betrieb zu stark ausgeprägten Längsrissen in der Schicht als auch im Interface Schicht-Grundwerkstoff mit anschließender Ablösung der Schicht. Durch die Wechselwirkung mit Kohlenstoff, der aus dem Grundwerkstoff in die Schicht hineindiffundieren kann oder während einer Wärmebehandlung im Ofen durch die Oberfläche in die Schicht hineindiffundiert, erhöht sich zusätzlich die Sprödigkeit der Cr-Re-Ausscheidungen. Durch eine Oxidation der Chrom-Rhenium-Phasen wird die Triebkraft zur Rißbildung noch verstärkt.

Zur Lösung dieser Aufgabe wird eine Schutzschicht zum Schutz eines Bauteils gegen Korrosion und Oxidation bei einer hohen Temperatur angegeben, welche im wesentlichen aus folgenden Elementen zusammengesetzt ist (Angabe der Anteile in Gewichtsprozent):

| | | |
|---|---|---|
| 0.5 | bis 2 % | Rhenium |
| 15 | bis 21 % | Chrom |
| 9 | bis 11.5% | Aluminium |
| 0,05 | bis 0,7% | Yttrium und/oder zumindest ein äquivalentes Metall aus der Gruppe umfassend Scandium und die Elemente der Seltenen Erden, |

Rest Kobalt und/oder Nickel sowie herstellungsbedingte Verunreinigungen.
Dabei wird die vorteilhafte Wirkung des Elementes Rhenium ausgenutzt unter Verhinderung der Sprödphasenbildung.

Festzustellen ist, dass die Anteile der einzelnen Elemente besonders abgestimmt sind im Hinblick auf ihre Wirkungen, die von dem Element Rhenium ausgehen. Wenn die Anteile so bemessen sind, dass sich keine Chrom-Rhenium-Ausscheidungen bilden, entstehen vorteilhafterweise keine Sprödphasen während des Einsatzes des Schutzschicht, so dass das Laufzeitverhalten verbessert und verlängert ist. Dies geschieht nicht nur durch eine Absenkung des Chromgehalts, sondern unter Berücksichtigung des Einflusses von Aluminium auf die Phasenbildung auch in der Reduzierung des Gehalts an Aluminium.

Die Schutzschicht weist bei guter Korrosionsbeständigkeit eine besonders gute Beständigkeit gegen Oxidation auf und zeichnet sich auch durch besonders gute Duktilitätseigenschaften aus, so dass sie besonders qualifiziert ist für die Anwendung in einer Gasturbine bei einer weiteren Steigerung der Eintrittstemperatur. Während des Betriebs kommt es kaum zu einer Versprödung, da die Schicht kaum Chrom-Rhenium-Ausscheidungen aufweist, die im Laufe des Einsatzes verspröden. Die Superlegierung weist keine oder maximal 6vol% Chrom-Rhenium-Ausscheidungen auf.

Günstig ist es dabei den Anteil von Rhenium auf etwa 1,5%, den Chromgehalt auf etwa 17%, den Aluminiumgehalt auf etwa 10% und den Yttrium-Gehalt auf etwa 0,3% festzulegen. Gewisse Schwankungen ergeben sich aufgrund grossindustrieller Herstellung.

Die Erfindung betrifft auch ein Bauteil, insbesondere ein Bauteil einer Gasturbine, das zum Schutz gegen Korrosion und Oxidation bei hohen Temperaturen einer Schutzschicht der vorbeschriebenen Art aufweist.

Die beschriebene Schutzschicht wirkt auch als Haftvermittlerschicht zu einer Superlegierung.
Auf diese Schicht können weitere Schichten, insbesondere keramische Wärmedämmschichten aufgebracht werden.

Bei diesem Bauteil ist die Schutzschicht vorteilhafterweise aufgetragen auf ein Substrat aus einer Superlegierung auf Nickel- oder Kobaltbasis. Als Substrat kommt insbesondere folgende Zusammensetzung in Frage (Angaben in Gewichtsprozenit) :

| | | |
|---|---|---|
| 0,03 | bis 0,05% | Kohlenstoff |
| 18 | bis 19% | Chrom |
| 12 | bis 15% | Kobalt |
| 3 | bis 6% | Molybdän |
| 1 | bis 1,5% | Wolfram |
| 2 | bis 2,5% | Aluminium |
| 3 | bis 5% | Titan |

wahlweise geringe Anteile von Tantal, Niob, Bor und/oder Zirkon, Rest Nickel

Solche Werkstoffe sind als Schmiedelegierungen unter den Bezeichnungen Udimet 520 und Udimet 720 bekannt.

Alternativ kommt für das Substrat des Bauteils folgende Zusammensetzung in Frage (Angaben in Gewichtsprozent):

| | | |
|---|---|---|
| 0,1 | bis 0,15 % | Kohlenstoff |
| 18 | bis 22 % | Chrom |
| 18 | bis 19 % | Kobalt |
| 0 | bis 2 % | Wolfram |
| 0 | bis 4 % | Molybdän |
| 0 | bis 1,5 % | Tontal |
| 0 | bis 1 % | Niob |
| 1 | bis 3 % | Aluminium |
| 2 | bis 4 % | Titan |
| 0 bis | 0,75 % | Hafnium |

wahlweise geringe Anteile von Bor
und/oder Zirkon, Rest Nickel.

Zusammensetzungen dieser Art sind als Gußlegierungen unter den Bezeichnungen GTD222, IN939, IN6203 und Udimet 500 bekannt.

Eine weitere Alternative für das Substrat des Bauteils ist folgende Zusammensetzung (Angaben in Gewichtsprozent):

| | | |
|---|---|---|
| 0,07 | bis 0,1% | Kohlenstoff |
| 12 | bis 16% | Chrom |
| 8 | bis 10% | Kobalt |
| 1,5 | bis 2% | Molybdän |
| 2,5 | bis 4% | Wolfram |
| 1,5 | bis 5% | Tantal |
| 0 | bis 1% | Niob |
| 3 | bis 4% | Aluminium |
| 3,5 | bis 5% | Titan |
| 0 | bis 0,1% | Zirkon |
| 0 bis | 1% | Hafnium |

wahlweise ein geringer Anteil von Bor
Rest Nickel

Zusammensetzungen dieser Art sind als Gußlegierungen PWA1483SX, IN738LC, GTD111, IN792CC und IN792DS bekannt; als besonders bevorzugt wird der Werkstoff IN738LC angesehen.

Als weitere Alternative für das Substrat des Bauteils wird folgende Zusammensetzung angesehen (Angaben in Gewichtsprozent):

| | | |
|---|---|---|
| etwa | 0,25 % | Kohlenstoff |
| 24 | bis 30 % | Chrom . |
| 10 | bis 11 % | Nickel |
| 7 | bis 8 % | Wolfram |
| 0 | bis 4 % | Tantal |
| 0 bis | 0,3 % | Aluminium |
| 0 bis | 0,3 % | Titan |
| 0 bis | 0,6 % | Zirkon |

wahlweise ein geringer Anteil von Bor
Rest Kobalt.

Solche Zusammensetzungen sind bekannt als Gußlegierungen unter den Bezeichnungen FSX414, X45, ECY768 und MAR-M-509.

Die Dicke der Schutzschicht auf dem Bauteil wird vorzugsweise auf einen Wert zwischen etwa 100 µm und 300 µm bemessen.

Die Schutzschicht eignet sich besonders zum Schutz eines Bauteils gegen Korrosion und Oxidation, während das Bauteil bei einer Materialtemperatur um etwa 950° C, bei Flugturbinen auch um etwa 1100° C, mit einem Rauchgas beaufschlagt wird.

Die Schutzschicht gemäß der Erfindung ist damit besonders qualifiziert zum Schutz eines Bauteils einer Gasturbine, insbesondere einer Leitschaufel, Laufschaufel oder anderen Komponente, die mit heißem Gas vor oder in der Turbine der Gasturbine beaufschlagt wird.

## Patentansprüche

1. Schutzschicht zum Schutz eines Bauteils gegen Korrosion und Oxidation bei hohen Temperaturen,
die aus folgenden Elementen zusammengesetzt ist
(Angaben in Gewichtsprozent):
| | | |
|---|---|---|
| 0.5 | bis 2% | Rhenium |
| 15 | bis 21% | Chrom |
| 9 | bis 11.5% | Aluminium |
| 0,05 | bis 0,7% | Yttrium und/oder zumindest ein äquivalentes Metall aus der Gruppe umfassend Scandium und die Elemente der Seltenen Erden, |
| 0 | bis 1% | Ruthenium |
Rest Kobalt und/oder Nickel sowie herstellungsbedingte Verunreinigungen.

2. Schutzschicht nach Anspruch 1,
enthaltend
| | |
|---|---|
| 1,5% | Rhenium |
| 17% | Chrom |
| 10 % | Aluminium |
| 0,3% | Yttrium und/oder ein äquivalentes Metall aus der Gruppe umfassend Scandium und die Elemente der Seltenen Erden. |

3. Schutzschicht nach Anspruch 1,
die maximal 6 vol% Chrom-Rhenium-Ausscheidungen enthält,
dass es kaum zu einer Versprödung der Schutzschicht kommt.

4. Bauteil, insbesondere ein Bauteil einer Gasturbine,
das zum Schutz gegen Korrosion und Oxidation bei hohen Temperaturen eine Schutzschicht nach einem oder mehreren der Ansprüche 1 bis 3 aufweist.

## Claims

1. Protective layer for protecting a component against corrosion and oxidation at high temperatures, which is composed of the following elements (details in per cent by weight):
0.5 to 2% of rhenium
15 to 21% of chromium
9 to 11.5% of aluminium
0.05 to 0.7% of yttrium and/or at least one equivalent metal from the group consisting of scandium and the rare earths,
0 to 1% of ruthenium
remainder cobalt and/or nickel and production-related impurities.

2. Protective layer according to Claim 1, containing 1.5% of rhenium
17% of chromium
10% of aluminium
0.3% of yttrium and/or an equivalent metal from the group consisting of scandium and the rare earths.

3. Protective layer according to Claim 1, which contains at most 6% by volume of chromium-rhenium precipitations so that there is scarcely any embrittlement of the protective layer.

4. Component, in particular a component of a gas turbine, which to protect against corrosion and oxidation at high temperatures has a protective layer according to one or more of Claims 1 to 3.

## Revendications

1. Couche de protection d'un élément vis-à vis de la corrosion et de l'oxydation à des températures hautes,
qui est composée des éléments suivants (indiqués en pourcentages en poids) :
de 0,5 à 2% de rhénium
de 15 à 21% de chrome
de 9 à 11,5% d'aluminium
0,05 à 0,7% d'yttrium et/ou d'au moins un métal équivalent du groupe comprenant le scandium et les éléments des terres rares,
de 0 à 1% de ruthénium
le reste étant du cobalt et/ou du nickel, ainsi que des impuretés dues à la production.

2. Couche de protection suivant la revendication 1, contenant
1,5% de rhénium
17% de chrome
10% d'aluminium
0,3% d'yttrium et/ou d'un métal équivalent du groupe comprenant le scandium et les éléments des terres rares.

3. Couche de protection suivant la revendication 1, qui contient au maximum 6% en volume de dépôts de chrome-rhénium, de sorte qu'il ne se produit guère une fragilisation de la couche de protection.

4. Élément, notamment élément d'une turbine à gaz, qui, pour la protection vis-à-vis de la corrosion et de l'oxydation aux températures hautes, a une couche de protection suivant l'une ou plusieurs des revendications 1 à 3.
